(19) Europäisches Patentamt
European Patent Office
Office européen des brevets

(11) **EP 4 667 725 A1**

(12) **EUROPEAN PATENT APPLICATION**

(43) Date of publication:
**24.12.2025 Bulletin 2025/52**

(21) Application number: **25183936.1**

(22) Date of filing: **19.06.2025**

(51) International Patent Classification (IPC):
*F02C 3/22* (2006.01)    *F02C 7/228* (2006.01)
*F02C 9/40* (2006.01)    *F23R 3/14* (2006.01)
*F23R 3/34* (2006.01)

(52) Cooperative Patent Classification (CPC):
**F02C 3/22; F02C 7/228; F02C 9/40; F23R 3/14;**
**F23R 3/286; F23R 3/34; F23R 3/346; F23R 3/36;**
F05D 2250/232; F05D 2250/311; F05D 2250/36;
F05D 2260/14; F05D 2270/082; F23C 2900/9901;
F23R 2900/00002

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **21.06.2024 IT 202400014398**

(71) Applicants:
• **Ansaldo Energia Switzerland AG**
  **5400 Baden (CH)**
• **ANSALDO ENERGIA S.p.A.**
  **16152 Genova (IT)**

(72) Inventors:
• **CIANI, Andrea**
  **5400 BADEN (CH)**
• **DUESING, Michael Klaus**
  **5400 BADEN (CH)**
• **PENNEL, Douglas**
  **5400 BADEN (CH)**
• **AMATO, Alberto**
  **16152 GENOVA (IT)**
• **TAY WO CHONG HILARES, Luis**
  **5400 BADEN (CH)**

(74) Representative: **Studio Torta S.p.A.**
  **Corso Magenta, 56**
  **20123 Milano (IT)**

(54) **HYBRID FUEL GAS TURBINE ENGINE AND METHOD FOR CONTROLLING A HYBRID FUEL GAS TURBINE ENGINE**

(57) A gas turbine engine includes a compressor (2), a combustor (3), a turbine (5), a fuel supply system (6), and a control system (7). Burner assemblies (10) of the combustor (3) each have a first burner (16) and a second burner (15), respectively defining a first reaction zone (Za) and a second reaction zone (Zp) and arranged coaxially along an axis (B), with the first burner (16) around the second burner (15) and the first reaction zone (Za) radially external to the second reaction zone (Zp). The fuel supply system (6) has a first line (6a), supplying a first fuel (F1) containing ammonia to one of the first burner (16) and the second burner (15), and a second line (6b), supplying a second fuel (F2). The control system (7) controls the fuel supply system (6) so that the first burner (16) transforms a first mixture with a first fuel-air equivalence ratio ($\phi 1$) greater than 1 in the first reaction zone (Za) and the second burner (15) transforms a second mixture with a second fuel-air equivalence ratio ($\phi 2$) less than 1 in the second reaction zone (Zp).

FIG. 2

EP 4 667 725 A1

## Description

Cross-reference to related applications

This patent application claims priority from Italian patent application no. 102024000014398 filed on June 21, 2024, the entire disclosure of which is incorporated herein by reference.

Technical field

The present invention relates to a hybrid fuel gas turbine engine, to a method for controlling a hybrid fuel gas turbine engine and to a burner assembly for a hybrid fuel gas turbine engine.

Background

As is known, ammonia is a promising fuel that can be utilized to supply gas turbine engines and make a strong contribution to decarbonization. The combustion of ammonia is, in fact, completely carbon-free, on the one hand, and, on the other hand, ammonia is a high-energy-density fuel, suitable for the efficient and long-lasting storage of large amounts of chemical energy. The required volume can be greatly reduced, for example with respect to hydrogen, because ammonia is rather easy to liquefy and can be kept in the liquid state at a relatively low pressure even at ambient temperature. In this manner, not only the storage, but also the transport and the distribution can be made efficient, safe and cost-effective.

However, it is known that the combustion of ammonia in the normal operating conditions of the gas turbine engines, in particular in a lean premixed mode, produces large amounts of nitrogen oxides (NOx). NOx emissions are critical and must be minimized, as well as carbon monoxide emissions. Therefore, the mixtures of ammonia and carbon-based fuels, such as natural gas or methane, may not meet the current stringent requirements for NOx emissions if supplied directly to the gas turbine engines. The advantage of a carbon-free or at least low-carbon combustion may thus be thwarted by a corresponding increase in Nox emissions.

On the other hand, there is evidence that the use of a rich mixture, with a fuel-air equivalence ratio greater than 1, can be a solution to the problem of NOx emissions from ammonia combustion, but it would require new combustion systems.

Furthermore, the reactivity of ammonia is relatively low and represents another obstacle that makes the use thereof difficult in the gas turbine engines, both as only fuel and mixed with other components.

In other words, the gas turbine engines as they normally operate are not compatible with the supply of ammonia as sole fuel or as component of a natural gas mixture.

## Summary

The object of the present invention is thus to provide a gas turbine engine, a method for controlling a gas turbine engine and a burner assembly for a gas turbine engine which allow overcoming or at least mitigating the described limitations.

According to an aspect of the present invention, a gas turbine engine is provided comprising:

a compressor, a combustor and a turbine;
a fuel supply system; and
a control system;
wherein the combustor comprises a plurality of burner assemblies each having a first burner and a second burner, respectively defining a first reaction zone and a second reaction zone and arranged coaxially along an axis of the respective burner assembly, with the first burner around the second burner and the first reaction zone around the second reaction zone;
wherein the fuel supply system comprises a first supply line, supplying a first fuel to one of the first burner and the second burner to form a first mixture containing the first fuel, and a second supply line, supplying a second fuel to the other of the first burner and the second burner to form a second mixture containing the second fuel, wherein the first fuel contains ammonia and the second fuel contains at least one of hydrogen, nitrogen, a hydrocarbon gas, a mixture of hydrogen and a hydrocarbon gas and a mixture of hydrogen and ammonia;
wherein the control system is configured to control the fuel supply system so that the first burner transforms one of the first mixture and the second mixture in the first reaction zone and the second burner transforms the other of the first mixture and the second mixture in the second reaction zone and so that one of the first mixture and the second mixture containing the first fuel has a first fuel-air equivalence ratio greater than 1 and the other of the first mixture and the second mixture containing the second fuel has a second fuel-air equivalence ratio less than 1.

In this manner, in the first reaction zone, the mixture containing the first fuel, i.e. ammonia, is subject to a thermochemical decomposition in oxygen deficiency, given the value of the first fuel-air equivalence ratio. In practice, the first burner is utilized as ammonia cracker and the molecular hydrogen produced by the decomposition, highly reactive, is subsequently burned by effect of the excess oxygen combustion of the second fuel by the second burner in the second reaction zone. The combustion of the molecular hydrogen in a short time substantially exhausts or anyway abates the availability of oxygen and prevents the formation of excess nitrogen oxides. The control thus allows exploiting the advantages of using ammonia as fuel, maintaining the compliance with the pollutant emission regulations and without the need for structural interventions on the burner assemblies.

According to a further aspect of the invention, the first fuel-air equivalence ratio is between 1 and 1.5.

The range of values of the first fuel-air equivalence ratio guarantees, on the one hand, low emissions of nitrogen oxides and, on the other hand, the conditions for the thermochemical decomposition of the first fuel.

According to a further aspect of the invention, 3 the second fuel-air equivalence ratio is less than 0.4.

In this manner, the second fuel-air equivalence ratio enables having a sufficient intake of oxygen for the thermochemical decomposition of ammonia in the first fuel and avoiding the formation of carbon monoxide.

According to a further aspect of the invention, each burner assembly comprises an inner frustoconical body and an outer frustoconical body and the first burner comprises an axial swirler, housed in the inner frustoconical body, and the second burner comprises a diagonal swirler, delimited internally by the inner frustoconical body and externally by the outer frustoconical body.

The structure of the burner assembly particularly lends itself to the use of the first essentially ammonia-based fuel with the support of a second fuel.

According to a further aspect of the invention, the first supply line is coupled to the first burner to supply the first fuel to the first burner and the second supply line is coupled to the second burner to supply the second fuel to the second burner, whereby the first fuel is decomposed in the first reaction zone and the second fuel is oxidized in the second reaction zone.

According to a further aspect of the invention, the first burner comprises an inner diverging conical duct arranged downstream of the axial swirler; and the first reaction zone is defined in the inner diverging conical duct and the inner diverging conical duct separates the first reaction zone from the second reaction zone.

The separation of the first reaction zone obtained thanks to the inner diverging conical duct favours the complete decomposition of ammonia present in the first fuel, avoiding the early combustion of the mixture downstream of the first burner. In practice, the inner diverging conical duct avoids that the mixture of air and the first fuel is diluted, prior to the complete or sufficient decomposition of ammonia, by the oxygen-rich mixture present in the second reaction zone.

According to a further aspect of the invention, the inner diverging conical duct protrudes axially beyond the outer frustoconical body downstream.

The separation of the first reaction zone from the second reaction zone in this manner is guaranteed for a sufficiently long section, to the advantage of the decomposition process of ammonia.

According to a further aspect of the invention, the second burner comprises an outer diverging conical duct, downstream of the diagonal swirler, the second reaction zone is defined downstream of the outer diverging conical duct and an outlet of the inner diverging conical duct is contained in the outer diverging conical duct.

In this manner, the second reaction zone can be axially moved downstream, avoiding the overheating of the first burner and, in particular, of the inner diverging conical duct when present. The thermal stresses on the inner diverging conical duct are mitigated both because the combustion reaction of the second fuel occurs more downstream, and because the mixture of air and second fuel, relatively fresh, produces a cooling effect inside the second burner around the first burner.

According to a further aspect of the invention, the first supply line is coupled to the second burner to supply the first fuel to the second burner and the second supply line is coupled to the first burner to supply the second fuel to the first burner, whereby the first fuel is decomposed in the second reaction zone and the second fuel is oxidized in the first reaction zone.

According to a further aspect of the invention, the second burner has a trailing edge and comprises diffusion supply nozzles circumferentially distributed on the trailing edge and the supply nozzles are fluidically coupled to the first supply line and are configured to inject a fraction of the first fuel directly into the second reaction zone.

According to a further aspect of the invention, a method for controlling a gas turbine engine is provided, wherein the gas turbine engine comprises:

a compressor, a combustor and a turbine; and
a fuel supply system;
wherein the combustor comprises a plurality of burner assemblies each having a first burner and a second burner, respectively defining a first reaction zone and a second reaction zone and arranged coaxially along an axis of the respective burner assembly, with the first burner around the second burner and the first reaction zone around the second reaction zone;
the method comprising:

supplying a first fuel to one of the first burner and the second burner and supplying a second fuel to the other of the first burner and the second burner, wherein the first fuel contains ammonia and the second fuel contains at least one of hydrogen, nitrogen, a hydrocarbon gas, a mixture of hydrogen and a hydrocarbon gas and a mixture of hydrogen and ammonia; and
controlling the fuel supply system so that the first burner transforms a first mixture with a first fuel-air equivalence ratio greater than 1 in the first reaction zone and the second burner transforms a second mixture with a second fuel-air equivalence ratio less than 1 in the second reaction zone.

According to a further aspect of the invention, a burner assembly for a gas turbine engine is further provided, comprising a first burner and a second burner, respectively defining a first reaction zone and a second reaction zone and arranged coaxially along an axis of the respective burner assembly, with the first burner around the second burner and the first reaction zone around the second reaction zone;

wherein the first burner comprises an inner diverging conical duct downstream of the axial swirler.

Brief description of the drawings

In order to better understand the present invention, preferred embodiments are presented, by way of non-limiting example, with reference to the accompanying drawings, wherein:

- Figure 1 is a simplified block diagram of a gas turbine engine, in accordance with an embodiment of the present invention;
- Figure 2 shows an axial cross-section of a component in use in the gas turbine engine of Figure 1, in accordance with an embodiment of the present invention;
- Figure 3 shows an axial cross-section of a component in use in the gas turbine engine of Figure 1, in accordance with a different embodiment of the present invention;
- Figure 4 shows an axial cross-section of a component in use in the gas turbine engine of Figure 1, in accordance with another embodiment of the present invention; and
- Figure 5 shows an axial cross-section of a component in use in the gas turbine engine of Figure 1, in accordance with a further embodiment of the present invention.

Description of embodiments

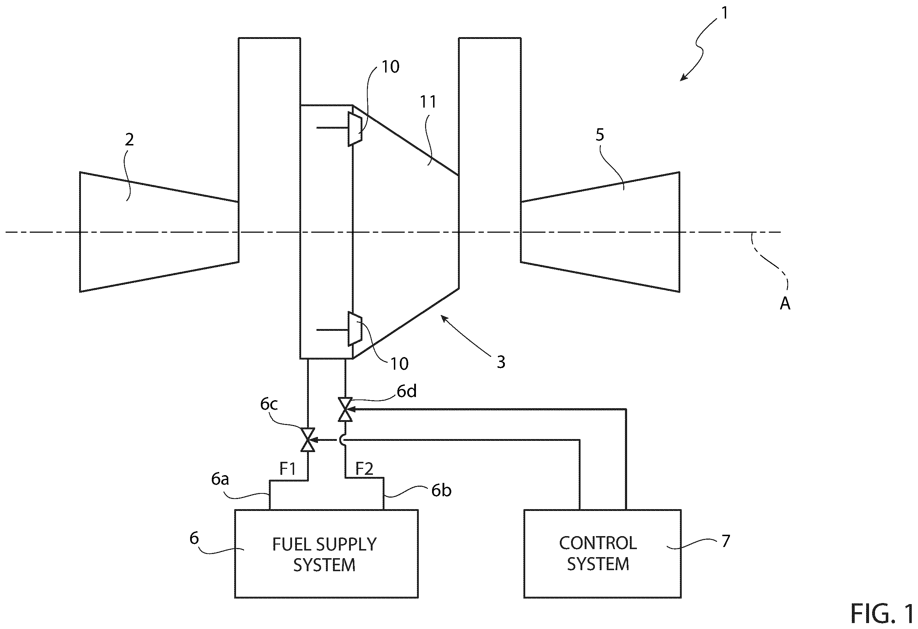

With reference to Figure 1, a gas turbine engine is indicated, as a whole, by reference numeral 1 and comprises a compressor 2, a combustor 3, a turbine 5, a fuel supply system 6 and a control system 7.

The compressor 2 and the turbine 5 are mounted on a same shaft, which extends along a main axis A.

In the embodiment described herein, the combustor 3 is of annular type and is arranged around the main axis A between the compressor 2 and the turbine 5. However, this is not to be considered limiting, since the invention can be advantageously utilized also with combustion chambers of different type, in particular of the silo type.

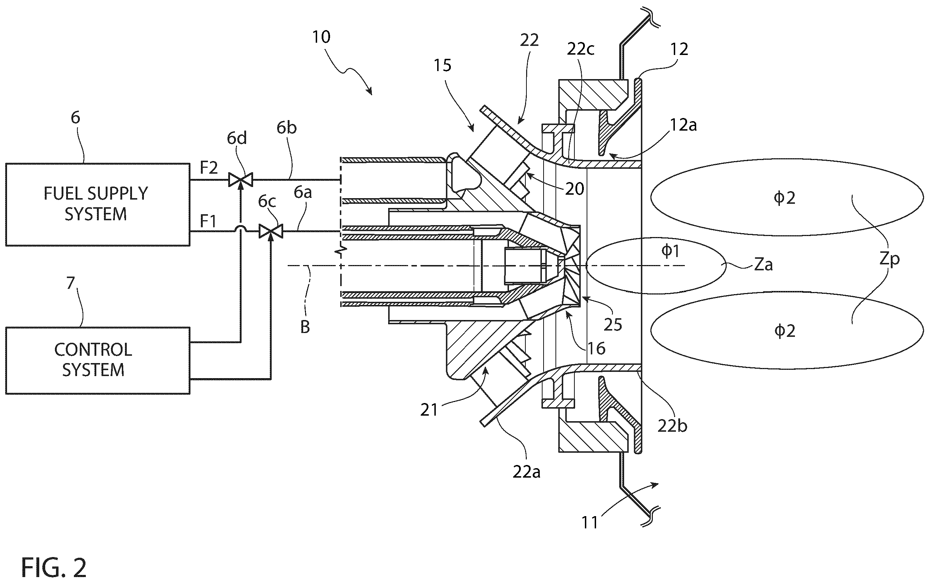

The combustor 3 comprises a plurality of burner assemblies 10, circumferentially distributed around the axis A, and an annular combustion chamber 11 (part of which is visible in Figure 2). The burner assemblies 10 are mounted in respective burner seats of the combustor 3 by the respective burner inserts 12.

The fuel supply system 6 is configured to supply to the combustor 3 gaseous ammonia ($NH_3$) as first fuel F1 and, in addition, a second fuel F2, for example fuel gas, such as natural gas or syngas, a highly reactive fuel, in particular a fuel with a high content of hydrogen, or a mixture of nitrogen, hydrogen and/or natural gas. For this purpose, the fuel supply system 6 comprises a first supply line 6a for the first fuel F1 (ammonia), and a second supply line 6b for the second fuel F2, which are provided with respective control valves 6c, 6d.

The control system 7 defines a load set-point for the gas turbine engine 1 and actuates the actuators of the engine (inlet swinging blades of the compressor 2, not shown, and control valves 6c, 6d) to supply air flows and fuel to the combustor 3 so as to satisfy the load set-point.

Figure 2 shows in detail one of the burner assemblies 10 and a portion of the combustion chamber 11. The burner assembly 10 extends along an axis B and comprises a peripheral or diagonal burner 15 and an axial burner 16, arranged coaxially around the axis B with the peripheral burner 15 arranged around the axial burner 16.

In an embodiment, the peripheral burner 15 and possibly also the axial burner 16 may receive all types of available fuels, i.e. ammonia, fuel gas and hydrogen, possibly mixed. In other embodiments, instead, the peripheral burner 15 can receive only fuel gas and hydrogen and the axial burner 16 can receive only ammonia.

The peripheral burner 15 is of the premixing type, arranged around the axial burner 16 and communicating with the combustion chamber 11 via the respective burner insert 12. More in detail, the peripheral burner 15 extends through a central opening 12a of the burner insert 12, so that the outlet of the peripheral burner 15 is inside the combustion chamber 11.

The peripheral burner 15 is arranged around the axial burner 16 and is equipped with a device for the generation of vortexes or turbulences, called diagonal swirler and indicated by reference numeral 20. The diagonal swirler 20 extends around the axis of the burner B and is radially defined between an inner frustoconical body 21 and an outer frustoconical body 22 of the peripheral burner 15. The inner frustoconical body 21 in an embodiment is a monolithic body, for example made with an additive manufacturing process such as SLM (Selective Laser Melting). The outer frustoconical body 22 is axially hollow and comprises a frustoconical wall 22a and, in an embodiment, an end portion 22b, for example cylindrical and connected to the frustoconical wall 22a by a connection portion 22c. The frustoconical wall 22a coaxially houses the inner frustoconical body 21, so that between the outer frustoconical body 22 and the inner frustoconical body 21 a substantially annular space 23 is defined which constitutes a passage for the supply of the air-fuel mixture.

The peripheral burner 15 is configured to define a peripheral reaction zone Zp having a substantially annular shape, possibly diverging, around the axis B.

The axial burner 16 comprises an axial swirler 25 which is in part housed inside the inner frustoconical body 21 and protrudes axially in continuity with the surface of the inner frustoconical body 21.

The axial burner 16 is configured to define an axial reaction zone Za along the axis B radially internal with respect to the peripheral reaction zone Zp. More precisely, the axial reaction zone Za and the peripheral reaction zone Zp are coaxial and symmetrical around the axis B. The axial reaction zone Za is defined immediately downstream of the axial burner 16 and may be in part contained in an end portion of the peripheral burner 15, in particular in the end portion 22b. The peripheral reaction zone Zp is substantially defined downstream of the outer frustoconical body 22 and may possibly be retracted in axial direction until being in part comprised in the end portion of the peripheral burner 15, for example according to the operating conditions. The extends in part around the axial reaction zone Za and there and the peripheral reaction zone and Zp the axial reaction zone Za may overlap.

In the embodiment of Figure 2, the first supply line 6a is connected to the axial burner 16 to supply the first fuel F1, ammonia, whereas the second supply line 6b is connected to the peripheral burner 15 to supply the second fuel F2.

The control system 7 acts on the control valves 6c, 6d (as well as on the inlet swinging blades of the compressor 2) to supply to the axial burner 16 and to the peripheral burner 15, respectively, a mixture of air and the first fuel F1 and a mixture of air and the second fuel F2 with controlled fuel-air equivalence ratios.

The fuel-air equivalence ratio for a mixture is defined as

$$\phi = \frac{m_F/m_A}{(m_F/m_A)_{ST}}$$

where $m_F$ is a fuel flow rate of the mixture, $m_A$ is an air flow rate of the mixture and $(m_F/m_A)_{ST}$ is the ratio between fuel flow rate and air flow rate in stoichiometric conditions.

The axial burner 16 receives a mixture with a first fuel-air equivalence ratio $\phi1$ greater than 1, which is transformed in the axial reaction zone Za. More precisely, the first fuel-air equivalence ratio $\phi1$ is between 1 and 1.5 and, in this manner, ammonia in the first fuel F1 is decomposed into molecular hydrogen and molecular nitrogen by thermochemical decomposition in oxygen deficiency (pyrolysis) in the axial reaction zone Za.

The peripheral burner 15 receives a mixture with a second fuel-air equivalence ratio $\phi2$ much less than 1 and, in this manner, the second fuel F2 is oxidized in the peripheral reaction zone Zp. For example, the second fuel-air equivalence ratio $\phi2$ is less than 0.4.

In practice, the axial burner 16 is utilized as ammonia cracker and the molecular hydrogen produced by the decomposition, highly reactive, is subsequently burned by effect of the excess oxygen combustion of the second fuel F2 by the peripheral burner 15 in the peripheral reaction zone Zp. The combustion of the molecular hydrogen in a short time substantially exhausts or anyway abates the availability of oxygen and reduces the formation of nitrogen oxides.

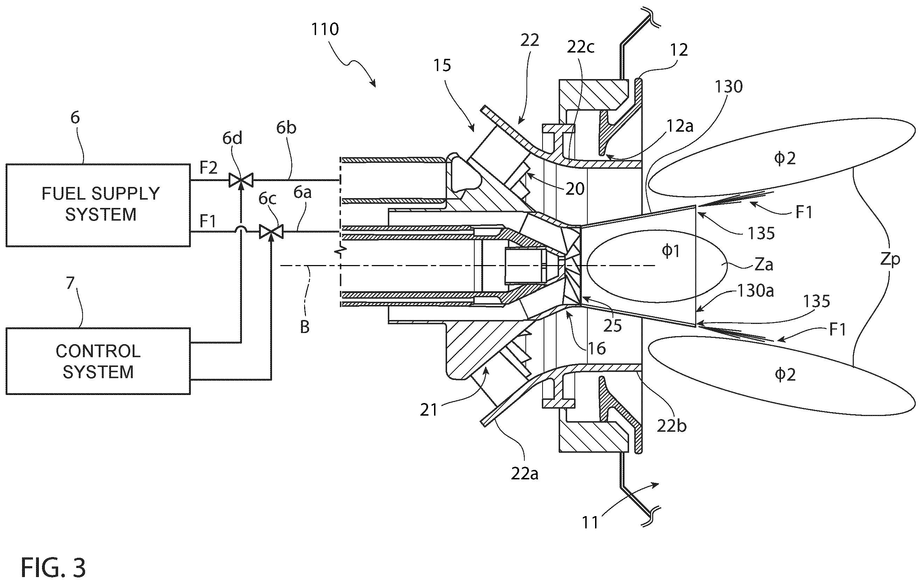

A different embodiment of the invention is illustrated in Figure 3, where parts equal to those already described are indicated by the same reference numerals. In this case, a burner assembly 110 is identical to the burner assembly 10 of Figure 2 with the exception that the axial burner 16 is equipped with an inner diverging conical duct 130, arranged downstream of the axial swirler 25 and at least in part inside the end portion 22b of the outer frustoconical body 22. In an embodiment, the inner diverging conical duct 130 protrudes axially beyond the outer frustoconical body 22 downstream (in the direction of the flow of the mixture of air and first fuel).

The axial reaction zone Za is defined in the inner diverging conical duct 130. The inner diverging conical duct 130 separates the axial reaction zone Za from the peripheral reaction zone Zp, avoiding the early triggering of the combustion of the molecular hydrogen produced by the thermochemical decomposition of ammonia.

As in the embodiment of Figure 2, the first fuel-air equivalence ratio $\phi1$ is between 1 and 1.5, whereas the second fuel-air equivalence ratio $\phi2$ is much less than 1.

Optionally, a fraction of the first fuel F1 may be supplied directly between the axial reaction zone Za and the peripheral reaction zone Zp via diffusion nozzles 135 arranged on a trailing edge 130a of the inner diverging conical duct 130 and connected to the first supply line 6a via ducts not shown in the wall of the inner diverging conical duct 130.

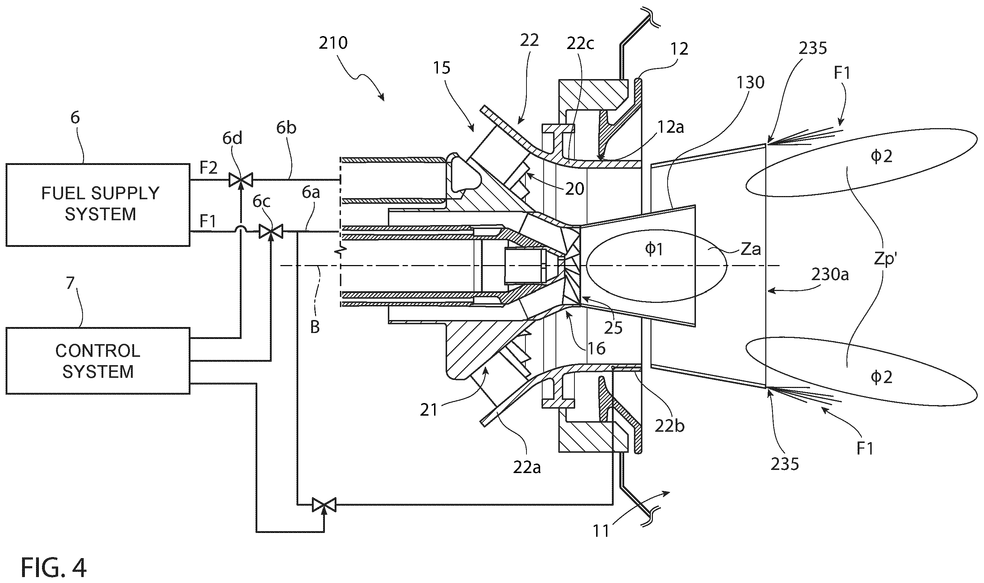

According to the embodiment of Figure 4, a burner assembly 210 is identical to the burner assembly 110 of Figure 3 with the exception that the peripheral burner 15 is equipped with an outer diverging conical duct 230, downstream of the diagonal swirler 20 and in continuity with the end portion 22b of the outer frustoconical body 22. The peripheral reaction zone Zp is defined downstream of the outer diverging conical duct 230 and the outlet of the inner diverging conical duct 130 is contained in the outer diverging conical duct 230. It is thereby possible to obtain a greater axial separation between the axial reaction zone Za and the peripheral reaction zone Zp.

As in the embodiment of Figure 2, the first fuel-air equivalence ratio $\phi1$ is between 1 and 1.5, whereas the second fuel-air equivalence ratio $\phi2$ is much less than 1.

Optionally, a fraction of the first fuel F1 may be supplied directly around the peripheral reaction zone Zp via diffusion nozzles 235 arranged on a trailing edge 230a of the outer diverging conical duct 230 and connected to the first supply line 6a via a branch of the first supply line 6a. In this case, it is possible to include a control valve 6e along the branch so as to control the flow rate of the first fuel F1 supplied via the diffusion nozzles 235.

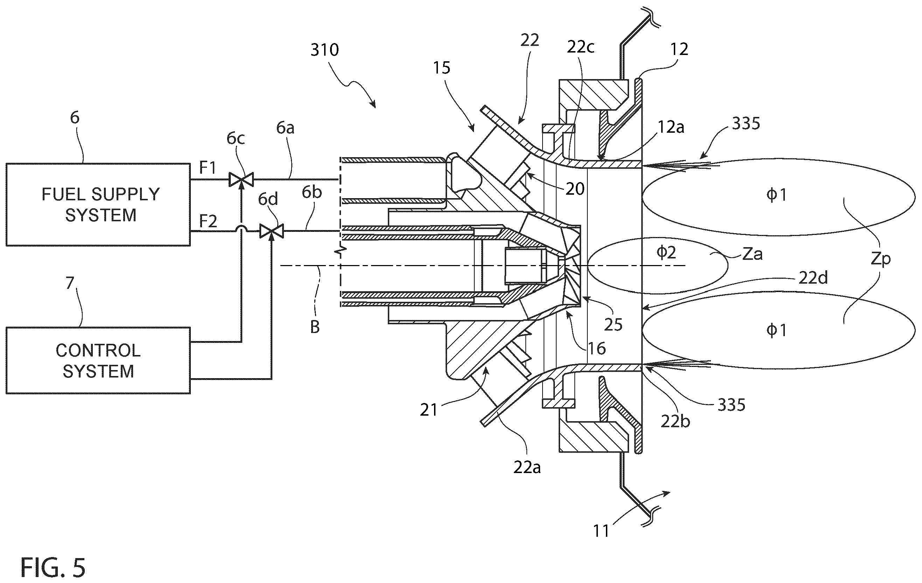

In the embodiment of Figure 5, a burner assembly 310 substantially has the same structure of the burner assembly 10 of Figure 2 and distinguishes itself for the fact that the first supply line 6a is coupled to the peripheral burner 15 to supply the first fuel F1 and the second supply line 6b is coupled to the axial burner 16 to supply the second fuel F2. In this manner, the first fuel F1 is decomposed in the peripheral reaction zone and the second fuel F2 is oxidized in the axial reaction zone.

As in the embodiment of Figure 2, the first fuel-air equivalence ratio $\phi1$ is between 1 and 1.5, whereas the second fuel-air equivalence ratio $\phi2$ is much less than 1.

Although with a different configuration, the same type of reaction described in the foregoing takes place, which is substantially determined by the values of the fuel-air equivalence ratios. Ammonia is thermally decomposed into molecular hydrogen and molecular nitrogen in oxygen deficiency, this time in the peripheral reaction zone, and the molecular hydrogen is subsequently burned by effect of the combustion which occurs in oxygen excess of the second fuel by the burner in the axial reaction zone.

Optionally, a fraction of the first fuel F1 can be supplied directly around the peripheral reaction zone Zp via diffusion nozzles 335 arranged on a trailing edge 22d of the outer frustoconical body 22 of the peripheral burner 15 and connected to the first supply line 6a.

Finally, it is clear that modifications and variations can be made to the gas turbine engine, to the method and to the burner assembly described and illustrated herein without thereby departing from the scope of protection of the present invention, as defined in the appended claims.

**Claims**

1. A gas turbine engine comprising:

   a compressor (2), a combustor (3) and a turbine (5);
   a fuel supply system (6); and
   a control system (7);
   wherein the combustor (3) comprises a plurality of burner assemblies (10; 110; 210; 310) each having a first burner (16) and a second burner (15), respectively defining a first reaction zone (Za) and a second reaction zone (Zp) and arranged coaxially along an axis (B) of the respective burner assembly (10; 110; 210; 310), with the first burner (16) around the second burner (15) and the first reaction zone (Za) radially external to the second reaction zone (Zp) and extending axially downstream of the first reaction zone (Za);
   wherein the fuel supply system (6) comprises a first supply line (6a), supplying a first fuel (F1) to one of the first burner (16) and the second burner (15) to form a first mixture containing the first fuel (F1), and a second supply line (6b), supplying a second fuel (F2) to the other of the first burner (16) and the second burner (15) to form a second mixture containing the second fuel (F2), wherein the first fuel (F1) contains ammonia and the second fuel (F2) contains at least one of hydrogen, nitrogen, a hydrocarbon gas, a mixture of hydrogen and a hydrocarbon gas and a mixture of hydrogen and ammonia;
   wherein the control system (7) is configured to control the fuel supply system (6) so that the first burner (16) transforms one of the first mixture and the second mixture in the first reaction zone (Za) and the second burner (15) transforms the other of the first mixture and the second mixture in the second reaction zone (Zp) and so that one of the first mixture and the second mixture containing the first fuel (F1) has a first fuel-air equivalence ratio ($\phi1$) greater than 1 and the other of the first mixture and the second mixture containing the second fuel (F2) has a second fuel-air equivalence ratio ($\phi2$) less than 1.

2. The gas turbine engine according to claim 1, wherein the first fuel-air equivalence ratio ($\phi1$) is between 1 and 1.5 and, preferably, the second fuel-air equivalence ratio ($\phi2$) is less than 0.4.

3. The gas turbine engine according to any one of the preceding claims, wherein each burner assembly (10; 110; 210; 310) comprises an inner frustoconical body (21) and an outer frustoconical body (22), and wherein the first burner comprises an axial swirler (25), housed in the inner frustoconical body (21), and the second burner comprises a diagonal swirler (20), delimited internally by the inner frustoconical body (21) and externally by the outer frustoconical body (22).

4. The gas turbine engine according to claim 3, wherein the first supply line (6a) is coupled to the first burner (16) to supply the first fuel (F1) to the first burner (16) and the second supply line (6b) is coupled to the second burner (15) to supply the second fuel (F2) to the second burner (15), whereby the first fuel (F1) is decomposed in the first reaction zone (Za) and the second fuel (F2) is oxidized in the second reaction zone (Zp).

5. The gas turbine engine according to claim 4, wherein the first burner comprises an inner diverging conical duct (130) arranged downstream of the axial swirler (25), wherein the first reaction zone (Za) is defined in the inner diverging conical duct (130) and wherein the inner diverging conical duct (130) separates the first reaction zone (Za) from the second reaction zone (Zp).

6. The gas turbine engine according to claim 5, wherein the inner diverging conical duct (130) protrudes axially beyond the outer frustoconical body (22) downstream.

7. The gas turbine engine according to claim 5 or 6, wherein the second burner (15) comprises an outer diverging conical duct (230) downstream of the diagonal swirler (20), wherein the second reaction zone (Zp) is defined downstream of the outer diverging conical duct (230) and wherein an outlet of the inner diverging duct (130) is contained in the outer diverging conical duct (230).

8. The gas turbine engine according to claim 3, wherein the first supply line (6a) is coupled to the second burner (15) to supply the first fuel (F1) to the second burner (15) and the second supply line (6b) is coupled to the first burner (16) to supply the second fuel (F2) to the first burner (16), whereby the first fuel (F1) is decomposed in the second reaction zone (Zp) and the second fuel (F2) is oxidized in the first reaction zone (Za).

9. The gas turbine engine according to any one of claims 3 to 8, wherein the second burner (15) has a trailing edge (230a; 22d) and comprises diffusion supply nozzles (235; 335) circumferentially distributed on the trailing edge, and wherein the supply nozzles (235; 335) are fluidically coupled to the first supply line (6a) and are configured to inject a fraction of the first fuel (F1) directly into the second reaction zone (Zp).

10. A method for controlling a gas turbine engine, wherein the gas turbine engine comprises:

    a compressor (2), a combustor (3) and a turbine (5); and
    a fuel supply system (6);
    wherein the combustor (3) comprises a plurality of burner assemblies (10) each having a first burner (16) and a second burner (15), respectively defining a first reaction zone (Za) and a second reaction zone (Zp) and arranged coaxially along an axis (B) of the respective burner assembly (10), with the first burner (16) around the second burner (15) and the first reaction zone (Za) radially external to the second reaction zone (Zp) and extending axially downstream of the first reaction zone (Za);
    the method comprising:

    supplying a first fuel (F1) to one of the first burner (16) and the second burner (15) and supplying a second fuel (F2) to the other of the first burner (16) and the second burner (15), wherein the first fuel (F1) contains ammonia and the second fuel (F2) contains at least one of hydrogen, nitrogen, a hydrocarbon gas, a mixture of hydrogen and a hydrocarbon gas and a mixture of hydrogen and ammonia; and
    checking the fuel supply system (6) so that the first burner (16) transforms a first mixture with a first fuel-air equivalence ratio ($\phi$1) greater than 1 in the first reaction zone (Za) and the second burner (15) transforms a second mixture with a second fuel-air equivalence ratio ($\phi$2) less than 1 in the second reaction zone (Zp).

11. The method according to claim 10, wherein the first fuel-air equivalence ratio ($\phi$1) is between 1 and 1.5 and, preferably, the second fuel-air equivalence ratio ($\phi$2) is less than 0.4.

12. A method according to any one of claims 10 or 11, wherein each burner assembly (10) comprises an inner frustoconical body (21) and an outer frustoconical body (22), and wherein the first burner comprises an axial swirler (25), housed in the inner frustoconical body (21), and the second burner comprises a diagonal swirler (20), delimited internally by the inner frustoconical body (21) and externally by the outer frustoconical body (22).

13. The method according to claim 12, wherein supplying comprises supplying the first fuel (F1) to the first burner (16) and supplying the second fuel (F2) to the second burner (15), whereby the first fuel (F1) is decomposed in the first reaction zone (Za) and the second fuel (F2) is oxidized in the second reaction zone (Zp).

14. The method according to any one of claims 10 to 12, wherein supplying comprises supplying the first fuel (F1) to the second burner (15) and supplying the second fuel (F2) to the first burner (16), whereby the first fuel (F1) is decomposed in the second reaction zone (Zp) and the second fuel (F2) is oxidized in the first reaction zone (Za).

15. The method according to any one of claims 10 to 14, comprising injecting a fraction of the first fuel (F1) directly into the second reaction zone (Zp) via circumferentially distributed diffusion supply nozzles on a trailing edge of the second burner (15).

FIG. 1

EP 4 667 725 A1

FIG. 2

FIG. 3

EP 4 667 725 A1

FIG. 4

FIG. 5

EP 4 667 725 A1

**Europäisches Patentamt**
**European Patent Office**
**Office européen des brevets**

# EUROPEAN SEARCH REPORT

**Application Number**

EP 25 18 3936

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2022/333534 A1 (SMITH LANCE L [US] ET AL) 20 October 2022 (2022-10-20) <br> * paragraph [0002] * <br> * paragraph [0066] - paragraph [0070] * <br> * paragraph [0080] * <br> * paragraph [0092] - paragraph [0095] * <br> * paragraph [0111] - paragraph [0114] * <br> * abstract; figures * <br> ----- | 1-15 | INV. <br> F02C3/22 <br> F02C7/228 <br> F02C9/40 <br> F23R3/14 <br> F23R3/34 |
| A | US 2024/035415 A1 (ITO SHINTARO [JP] ET AL) 1 February 2024 (2024-02-01) <br> * paragraph [0018] - paragraph [0025] * <br> * paragraph [0029] - paragraph [0030] * <br> * paragraph [0034] - paragraph [0036] * <br> * figures * <br> ----- | 1-15 | |
| A | EP 4 206 535 A1 (ANSALDO ENERGIA SWITZERLAND AG [CH]) 5 July 2023 (2023-07-05) <br> * paragraph [0002] * <br> * paragraph [0030] - paragraph [0035] * <br> * paragraph [0040] * <br> * abstract; figures * <br> ----- | 1-15 | |
| A | US 2023/313995 A1 (SELIM HATEM M [SA] ET AL) 5 October 2023 (2023-10-05) <br> * paragraph [0007] * <br> * paragraph [0026] - paragraph [0027] * <br> * paragraph [0034] - paragraph [0042] * <br> * paragraph [0048] - paragraph [0055] * <br> * abstract; figures * <br> ----- | 1-15 | |
| A,P | US 12 264 820 B1 (LI SHUIQING [CN] ET AL) 1 April 2025 (2025-04-01) <br> * column 1, line 26 - line 34 * <br> * column 4, line 9 - column 6, line 64 * <br> * abstract; figures * <br> ----- | 1,2,10, 11 | |

**TECHNICAL FIELDS SEARCHED (IPC)**

F02C
F23R
F23C

The present search report has been drawn up for all claims

| Place of search | Date of completion of the search | Examiner |
|---|---|---|
| The Hague | 31 October 2025 | O'Shea, Gearóid |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

...................................................................................

& : member of the same patent family, corresponding document

EPO FORM 1503 03.82 (P4C01)

## ANNEX TO THE EUROPEAN SEARCH REPORT
## ON EUROPEAN PATENT APPLICATION NO.

EP 25 18 3936

This annex lists the patent family members relating to the patent documents cited in the above-mentioned European search report.
The members are as contained in the European Patent Office EDP file on
The European Patent Office is in no way liable for these particulars which are merely given for the purpose of information.

31-10-2025

| Patent document cited in search report | | | Publication date | Patent family member(s) | | | Publication date |
|---|---|---|---|---|---|---|---|
| US | 2022333534 | A1 | 20-10-2022 | US | 2022333534 | A1 | 20-10-2022 |
| | | | | US | 2025223930 | A1 | 10-07-2025 |
| US | 2024035415 | A1 | 01-02-2024 | CN | 116981887 | A | 31-10-2023 |
| | | | | EP | 4317787 | A1 | 07-02-2024 |
| | | | | JP | 7613558 | B2 | 15-01-2025 |
| | | | | JP | WO2022202196 | A1 | 29-09-2022 |
| | | | | US | 2024035415 | A1 | 01-02-2024 |
| | | | | WO | 2022202196 | A1 | 29-09-2022 |
| EP | 4206535 | A1 | 05-07-2023 | CN | 116379472 | A | 04-07-2023 |
| | | | | EP | 4206535 | A1 | 05-07-2023 |
| US | 2023313995 | A1 | 05-10-2023 | DE | 102023106678 | A1 | 05-10-2023 |
| | | | | JP | 2023152785 | A | 17-10-2023 |
| | | | | US | 2023313995 | A1 | 05-10-2023 |
| US | 12264820 | B1 | 01-04-2025 | CN | 117588753 | A | 23-02-2024 |
| | | | | US | 12264820 | B1 | 01-04-2025 |
| | | | | WO | 2025107596 | A1 | 30-05-2025 |

EPO FORM P0459

For more details about this annex : see Official Journal of the European Patent Office, No. 12/82

**EP 4 667 725 A1**

**Patent documents cited in the description**

- IT 102024000014398